# EUROPÄISCHE PATENTSCHRIFT

(11) **EP 3 696 384 B1**
(45) Veröffentlichungstag und Bekanntmachung des Hinweises auf die Patenterteilung: **12.05.2021**
(21) Anmeldenummer: 20155522.4
(22) Anmeldetag: 05.02.2020
(51) Int. Cl.: F01N 13/08, F16K 1/22, F02D 9/10

(54) **ABGASKLAPPE**
EXHAUST FLAP
CLAPET DE GAZ D'ÉCHAPPEMENT

(30) Priorität: 13.02.2019 DE 102019103556
(43) Veröffentlichungstag der Anmeldung: 19.08.2020
(73) Patentinhaber: Eberspächer Exhaust Technology GmbH, 66539 Neunkirchen (DE)
(72) Erfinder: Schmitt, Steffen, 73760 Ostfildern (DE); Zeumer, Annika, 73249 Wernau (DE); Wacker, Andreas, 73207 Plochingen (DE)
(74) Vertreter: Ruttensperger Lachnit Trossin Gomoll

(56) Entgegenhaltungen:
- DE-A1-102011 107 088
- DE-A1-102014 017 523
- DE-A1-102015 202 211
- DE-A1-102016 203 794

## Beschreibung

Die vorliegende Erfindung betrifft eine Kopplungsanordnung zur Kopplung einer Antriebswelle eines Schwenkantriebs einer Abgasklappe für den Abgasstrom einer Brennkraftmaschine mit einer um eine Schwenkachse drehbaren, eine Klappenblende tragenden Schwenkwelle.

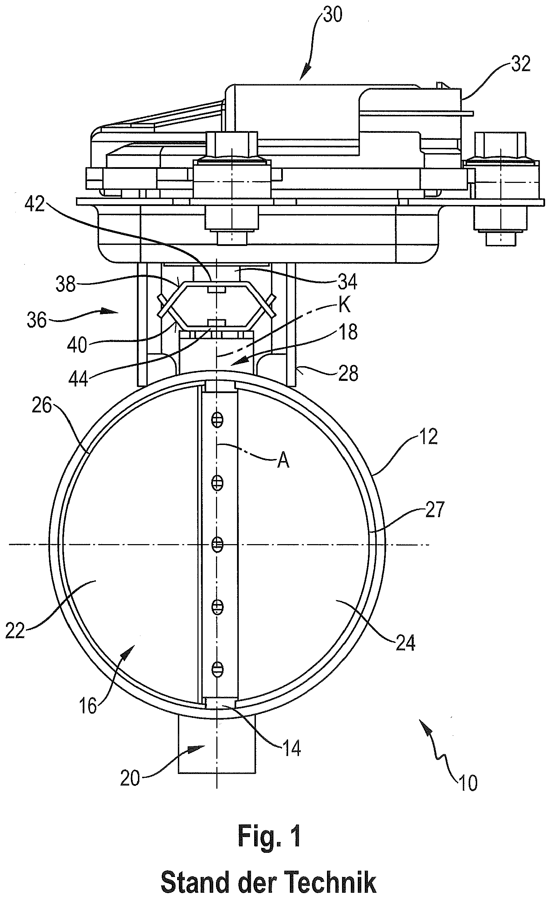

Eine Abgasklappe ist aus der DE 10 2016 114 704 A1 bekannt. Diese in Fig. 1 dargestellte Abgasklappe 10 umfasst ein in eine Abgasanlage zu integrierendes Klappenrohr 12, welches einen beispielsweise kreisrunden Querschnitt aufweist und ein Gehäuse für eine an einer Schwenkwelle 14 um eine Schwenkachse A drehbar getragene Klappenblende 16 bereitstellt. Die Schwenkwelle 14 ist in ihren beiden aus dem Abgasrohr 12 hervorstehenden Endbereichen an jeweiligen Lagerungsansätzen 18 bzw. 20 um die Schwenkachse A drehbar getragen. Die an der Schwenkwelle 14 vorgesehene Klappenblende 16 weist zwei Blendenflügel 22, 24 auf, die in dem in Fig. 1 dargestellten Schließzustand der Klappenblende in Anlage an jeweiligen Flügelanschlägen 26, 27 am Innenumfang des Klappenrohrs 12 sind und somit den Abgasströmungsweg durch das Klappenrohr 12 hindurch im Wesentlichen absperren. Bei Verdrehung der Klappenblende 16 um die Schwenkachse A ausgehend von dem in Fig. 1 dargestellten Schließzustand beispielsweise um etwa 90° sind die beiden Klappenflügel 22, 24 zur Abgasströmungsrichtung im Wesentlichen parallel ausgerichtet, so dass das Klappenrohr 12 im Wesentlichen ungehindert von Abgas durchströmt werden kann.

Am Klappenrohr 12 ist über eine Trägerstruktur 28 ein Schwenkantrieb 30 für die Klappenblende 16 getragen. Der Schwenkantrieb 30 umfasst einen in einem Gehäuse 32 untergebrachten Elektromotor. Eine aus dem Gehäuse 32 hervorstehende Antriebswelle 34 des Schwenkantriebs 30 ist über eine allgemein mit 36 bezeichnete Kopplungsanordnung zur gemeinsamen Drehung mit der Schwenkwelle 14 gekoppelt und kann somit bei Erregung des Elektromotors die Klappenblende 16 um die Schwenkachse A drehen.

Die Kopplungsanordnung 36 umfasst zwei beispielsweise aus Federblech oder dergleichen gebogene Kopplungselemente 38, 40. Das Kopplungselement 38 stellt einen ersten Kopplungsbereich 42 bereit, in welchem die Kopplungsanordnung 36 in Drehkopplungsformschlusseingriff mit der Antriebswelle 34 steht. Das Kopplungselement 40 stellt einen zweiten Kopplungsbereich 44 bereit, in welchem die Kopplungsanordnung 36 in Drehkopplungsformschlusseingriff mit der Schwenkwelle 14 steht. Die beiden Kopplungselemente 38, 40 greifen ferner in ihren beiden radial bezüglich der Schwenkachse A außen liegenden Bereichen ineinander ein und sind auf diese Art und Weise miteinander in Drehkopplungsformschlusseingriff und axial bezüglich einander abgestützt, so dass über diese axiale Abstützung und die dadurch generierte Vorspannung die Schwenkwelle 14 in Richtung von der Antriebswelle 34 weg vorgespannt ist und somit in einer definierten Positionierung in axialer Richtung bezüglich der Schwenkachse A gehalten ist.

Aus der DE 10 2015 202 211 A1 ist eine Kopplungsanordnung zur Kopplung einer Antriebswelle eines Schwenkantriebs einer Abgasklappe mit einer um eine Schwenkachse drehbaren und eine Klappenblende tragenden Schwenkwelle gemäß dem Oberbegriff des Anspruchs 1 bekannt. Bei dieser bekannten Kopplungsanordnung umfasst ein Kopplungselement zwei Kopplungselementteile. Eines der Kopplungselementteile ist zur Ankopplung an die Antriebswelle des Schwenkantriebs ausgebildet. Das andere der Kopplungselementteile ist zur Ankopplung an die Schwenkwelle der Klappenblende ausgebildet. Die beiden Kopplungselementteile sind durch axialen Formschluss und in Umfangsrichtung wirkenden Formschluss miteinander gekoppelt. Um das in diesem Formschluss bestehende axiale Spiel und Umfangsspiel zu eliminieren, ist ein als Schraubenfeder ausgebildetes Vorspannorgane vorgesehen. Dieses stützt sich bezüglich des zur Ankopplung an die Schwenkwelle ausgebildeten Kopplungselementteils und bezüglich eines mit dem zur Ankopplung an die Antriebswelle ausgebildeten Kopplungselementteil fest verbundenen und zwischen den beiden Kopplungselementteilen angeordneten Abstützelements ab.

Es ist die Aufgabe der vorliegenden Erfindung, eine Kopplungsanordnung zur Kopplung einer Antriebswelle eines Klappenantriebs einer Abgasklappe für den Abgasstrom einer Brennkraftmaschine mit einer um eine Schwenkachse drehbaren, eine Klappenblende tragenden Schwenkwelle vorzusehen, bei welcher bei guter thermischer Entkopplung eine definierte Positionierung der Antriebswelle bezüglich der Schwenkwelle gewährleistet ist.

Erfindungsgemäß wird diese Aufgabe gelöst durch eine Kopplungsanordnung zur Kopplung einer Antriebswelle eines Schwenkantriebs einer Abgasklappe für den Abgasstrom einer Brennkraftmaschine mit einer um eine Schwenkachse drehbaren, eine Klappenblende tragenden Schwenkwelle, umfassend:
- ein Kopplungselement mit einem mit einer Antriebswelle in Drehkopplungsformschlusseingriff zu bringenden ersten Kopplungsbereich und einem mit einer Schwenkwelle in Drehkopplungsformschlusseingriff zu bringenden zweiten Kopplungsbereich,
- ein bezüglich des Kopplungselements und bezüglich eines Abstützelements abgestütztes Vorspannorgan, wobei durch das Vorspannorgan das Kopplungselement in Richtung einer Kopplungsachse von dem Abstützelement axial weg und in Umfangsrichtung vorgespannt ist,
- wenigstens eine Vormontage-Blockieranordnung zum Halten des Abstützelements unter axialer Vorspannung und Umfangsvorspannung in einer Vormontagestellung bezüglich des Kopplungselements.

Diese erfindungsgemäße Kopplungsanordnung zeichnet sich durch ein bezüglich der Antriebswelle eines Klappenantriebs einerseits und der Schwenkwelle andererseits abgestütztes Vorspannorgan aus, wobei durch das Vorspannorgan im Einbauzustand die Kopplungsanordnung in Richtung der Schwenkachse der Schwenkwelle bzw. auch der Kopplungsachse axial zu vorgespannt ist und die Antriebswelle und die Schwenkwelle bezüglich einander um die Schwenkachse bzw. die Kopplungsachse in Umfangsrichtung vorspannt sind. Ein zur Wärmeübertragung beitragender Kontakt zwischen den beiden Wellen und der Kopplungsanordnung besteht im Wesentlichen nur im Bereich des Kopplungselements, wodurch eine gute thermische Entkopplung gewährleistet ist. Andererseits ermöglicht das Vorsehen der Vormontage-Blockieranordnung einen einfachen Zusammenbau der Kopplungsanordnung mit einer der beiden Wellen, insbesondere der Schwenkwelle, bevor dann eine Verbindung mit der anderen der beiden Wellen, insbesondere der Antriebswelle, hergestellt wird.

Eine zuverlässig wirkende Vorspannung kann beispielsweise dadurch bereitgestellt werden, dass das Vorspannorgan eine Schraubenfeder vorzugsweise mit einer Mehrzahl von Windungen umfasst.

Für einen stabilen Zusammenhalt kann das Vorspannorgan in einem ersten Verbindungsbereich an das Kopplungselement fest angekoppelt sein und in einem zweiten Verbindungsbereich an das Abstützelement fest angekoppelt sein.

Dies kann beispielsweise dadurch erreicht werden, dass der erste Verbindungsbereich einen in einem ersten axialen Endbereich des Vorspannorgans sich erstreckenden ersten Windungsendabschnitt umfasst, und dass der zweite Verbindungsbereich einen in einem zweiten axialen Endbereich des Vorspannorgans sich erstreckenden zweiten Windungsendabschnitt umfasst.

Für eine zuverlässige Kopplung mit den beiden Wellen kann das Kopplungselement im ersten Kopplungsbereich und im zweiten Kopplungsbereich im Wesentlichen plattenartig ausgebildet sein. Alternativ oder zusätzlich kann in wenigstens einem der Kopplungsbereiche das Kopplungselement einander überlappend angeordnete Kopplungselement-Endbereiche aufweisen. Dies gestattet es, das Kopplungselement aus einem Blechstreifen, vorzugsweise aus Federstahl, zu biegen.

Die wenigstens eine Vormontage-Blockieranordnung kann an einem Element von Kopplungselement und Abstützelement einen Blockieransatz umfassen und kann an dem anderen Element von Kopplungselement und Abstützelement einen Blockierarm mit einem den Blockieransatz an der von dem anderen Element von Kopplungselement und Abstützelement abgewandten Seite übergreifenden und in einem Vormontage-Blockierzustand daran angreifenden Axialblockierbereich und einem dem Blockieransatz in Umfangsrichtung gegenüberliegenden und im Vormontage-Blockierzustand daran anliegenden Umfangsblockierbereich umfassen.

Dabei kann eine zuverlässige Zusammenwirkung zwischen Blockieransatz und Blockierarm beispielsweise dadurch erreicht werden, dass der Blockieransatz von dem einen Element von Kopplungselement und Abstützelement bezüglich der Kopplungsachse nach radial außen vorsteht, oder/und dass der Blockierarm von dem anderen Element von Kopplungselement und Abstützelement sich im Wesentlichen axial auf das eine Element von Kopplungselement und Abstützelement zu erstreckt.

Um im Betriebszustand eine Vorspannung der beiden zu koppelnden Wellen gewährleisten zu können, wird vorgeschlagen, dass an dem Blockierarm ein bezüglich des Umfangsblockierbereichs in Umfangsrichtung von dem Blockieransatz weg zurückversetzter Freigabebereich vorgesehen ist. Beispielsweise kann der Freigabebereich eine Freigabeaussparung umfassen.

Um sicherzustellen, dass beim Einführen einer axialen Kompression die Blockierwirkung in Umfangsrichtung aufgehoben wird, kann erfindungsgemäß vorgesehen sein, dass der Umfangsblockierbereich in Richtung der Kopplungsachse zwischen dem Freigabebereich und dem Axialblockierbereich angeordnet ist.

Das eine Element ist vorzugsweise das Kopplungselement, und das andere Element ist vorzugsweise das Abstützelement.

Die Erfindung betrifft ferner eine Abgasklappen-Vormontagebaugruppe, umfassend ein Klappenrohr, eine im Inneren des Klappenrohrs an einer um eine Schwenkachse drehbaren Schwenkwelle getragene Klappenblende sowie eine an der Schwenkwelle festgelegte Kopplungsanordnung mit erfindungsgemäßem Aufbau.

In einer derartigen Abgasklappen-Vormontagebaugruppe sind das Abstützelement und das Kopplungselement in einem Vormontagezustand bezüglich einander blockiert, so dass beim nachfolgenden Zusammenfügen mit einem Klappenantrieb durch Freigabe des Blockieransatzes bei axialer Kompression der Kopplungsanordnung die beiden miteinander gekoppelten Wellen sowohl axial, als auch in Umfangsrichtung bezüglich einander vorgespannt sind.

Dabei kann beispielsweise vorgesehen sein, dass die Kopplungsanordnung mit ihrem zweiten Kopplungsbereich an der Schwenkwelle festgelegt ist, und dass im zweiten Kopplungsbereich die Kopplungsanordnung eine zweite Formschluss-Eingriffsöffnung mit einer Eingriffsöffnung-Querschnittsgeometrie aufweist und die Schwenkwelle ein in die zweite Formschluss-Eingriffsöffnung eingreifendes Formschluss-Eingriffsende mit zur Eingriffsöffnung-Querschnittsgeometrie der zweiten Formschluss-Eingriffsöffnung komplementärer Eingriffsende-Querschnittsgeometrie aufweist.

Für eine stabile Anbindung wird vorgeschlagen, dass die Kopplungsanordnung durch Materialschluss an der Schwenkwelle festgelegt ist.

Die Erfindung betrifft ferner eine Abgasklappe für den Abgasstrom einer Brennkraftmaschine, umfassend ein Klappenrohr, eine im Inneren des Klappenrohrs an einer um eine Schwenkachse drehbaren Schwenkwelle getragene Klappenblende, einen Schwenkantrieb für die Schwenkwelle sowie eine die Schwenkwelle mit einer Antriebswelle des Schwenkantriebs zur gemeinsamen Drehung um die Schwenkachse koppelnde Kopplungsanordnung mit erfindungsgemäßem Aufbau. Dabei kann beispielsweise vorgesehen sein, dass eine die Kopplungsanordnung enthaltende Abgasklappen-Vormontagebaugruppe mit einem Klappenantrieb zum Aufbau der Abgasklappe zusammengefügt wird.

Um eine Vorspannung der beiden miteinander gekoppelten Wellen zu gewährleisten, wird vorgeschlagen, dass das Vorspannorgan an einer Welle von Antriebswelle und Schwenkwelle über das Abstützelement axial und in Umfangsrichtung abgestützt ist und an der anderen Welle von Antriebswelle und Schwenkwelle über das Kopplungselement axial abgestützt ist.

Ferner ist zum Erhalt der Vorspannung der beiden Wellen sowohl in Umfangsrichtung als auch in axialer Richtung bezüglich einander der Blockieransatz außer Blockiereingriff mit Axialblockierbereich und dem Umfangsblockierbereich des Blockierarms.

Für eine stabile und präzise Ankopplung der Kopplungsanordnung an die beiden Wellen wird vorgeschlagen, dass im ersten Kopplungsbereich die Kopplungsanordnung eine erste Formschluss-Eingriffsöffnung mit einer Eingriffsöffnung-Querschnittsgeometrie aufweist und die Antriebswelle ein in die erste Formschluss-Eingriffsöffnung eingreifendes Formschluss-Eingriffsende mit zur Eingriffsöffnung-Querschnittsgeometrie der ersten Formschluss-Eingriffsöffnung komplementärer Eingriffsende-Querschnittsgeometrie aufweist, oder/und dass im zweiten Kopplungsbereich die Kopplungsanordnung eine zweite Formschluss-Eingriffsöffnung mit einer Eingriffsöffnung-Querschnittsgeometrie aufweist und die Schwenkwelle ein in die zweite Formschluss-Eingriffsöffnung eingreifendes Formschluss-Eingriffsende mit zur Eingriffsöffnung-Querschnittsgeometrie der zweiten Formschluss-Eingriffsöffnung komplementärer Eingriffsende-Querschnittsgeometrie aufweist.

Um zwischen der Schwenkwelle und der Antriebswelle eine Umfangsvorspannung generieren bzw. über das Abstützelement übertragen zu können, ist es erforderlich, zwischen dem Abstützelement und der mit diesem zusammenwirkenden Welle, also beispielsweise der Antriebswelle, ebenfalls einen Umfangsformschluss bereitzustellen. Hierzu wird vorgeschlagen, dass das Abstützelement eine Formschluss-Eingriffsöffnung mit einer Eingriffsöffnung-Querschnittsgeometrie aufweist und die Antriebswelle ein in die Formschluss-Eingriffsöffnung des Abstützelements eingreifendes Formschluss-Eingriffsende mit zur Eingriffsöffnung-Querschnittsgeometrie der Formschluss-Eingriffsöffnung des Abstützelements komplementärer Eingriffsende-Querschnittsgeometrie aufweist.

Der Zusammenbau einer erfindungsgemäß aufgebauten Abgasklappe kann dadurch vereinfacht werden, dass das Formschluss-Eingriffsende der Antriebswelle in Richtung der Schwenkachse im Wesentlichen zylindrisch ausgebildet ist. Ferner kann die Kopplungsanordnung an der Schwenkwelle gegen Loslösen gesichert getragen sein.

Die vorliegende Erfindung wird nachfolgend mit Bezug auf die beiliegenden Figuren detailliert beschrieben. Es zeigt:
- Fig. 1: eine aus dem Stand der Technik bekannte Abgasklappe;
- Fig. 2: eine perspektivische Ansicht der erfindungsgemäß ausgestalteten Kopplung einer Antriebswelle eines Schwenkantriebs einer Abgasklappe mit einer Schwenkwelle einer Abgasklappe;
- Fig. 3: eine perspektivische Ansicht einer Kopplungsanordnung für eine Abgasklappe in einem Vormontage-Blockierzustand;
- Fig. 4: eine der Fig. 3 entsprechende Ansicht einer Kopplungsanordnung bei aufgehobener Blockierwirkung, betrachtet aus einer anderen Perspektive.

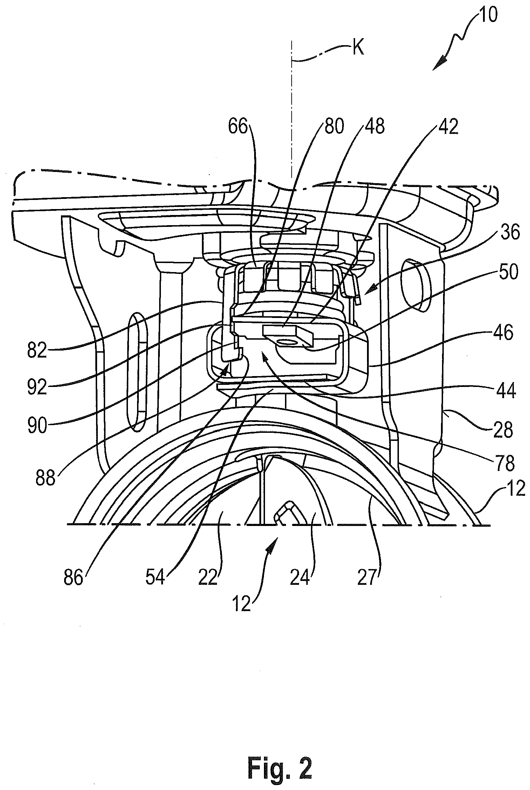

Bevor im Folgenden mit Bezug auf die Fig. 2 bis 4 die erfindungsgemäß ausgestaltete Kopplung einer Antriebswelle mit einer Schwenkwelle einer Abgasklappe detailliert beschrieben wird, wird darauf hingewiesen, dass der grundsätzliche Aufbau einer erfindungsgemäß aufgebauten Abgasklappe mit einem Schwenkantrieb, einem Klappenrohr und einer in dem Klappenrohr vorgesehenen und durch den Schwenkantrieb zur Drehung um eine Schwenkachse antreibbaren Klappenblende dem vorangehend mit Bezug auf die Fig. 1 beschriebenen Aufbau entsprechen kann. Es wird daher bezüglich des grundsätzlichen Aufbaus einer auch erfindungsgemäß aufgebauten Klappenblende auf die Fig. 1 und die zugehörige Beschreibung verwiesen.

Die Fig. 2 bis 4 zeigen ein näherungsweise kastenartiges Kopplungselement 46 der Kopplungsanordnung 36, das beispielsweise aus einem Blechstreifen gebogen sein kann und in einem ersten plattenartigen Bereich den ersten Kopplungsbereich 42 und einem durch einander überlappende Enden gebildeten zweiten plattenartigen Bereich den zweiten Kopplungsbereich 44 bereitstellt. Im ersten Kopplungsbereich 42 weist das Kopplungselement 46 eine erste Formschlusseingriffsöffnung 48 auf, in welche ein Formschluss-Eingriffsende 50 der Antriebswelle 34 eingreift. Die erste Formschluss-Eingriffsöffnung 48 weist eine beispielsweise langlochartig ausgebildete Eingriffsöffnung-Querschnittsgeometrie auf, zu welcher eine Eingriffsende-Querschnittsgeometrie des Formschluss-Eingriffsendes 50 der Antriebswelle 34 komplementär ist. Beispielsweise können die beiden Querschnittsgeometrien vieleckig, beispielsweise im Wesentlichen rechteckig, ausgebildet sein. Das Formschluss-Eingriffsende 50 der Antriebswelle 34 ist im Wesentlichen zylindrisch geformt, weist also in seinem in Wechselwirkung mit dem Kopplungselement 46 tretenden Längenbereich eine in axialer Richtung sich im Wesentlichen nicht verändernde Querschnittsgeometrie und Querschnittsabmessung auf.

In entsprechender Weise ist im zweiten Kopplungsbereich 44 eine zweite Formschluss-Eingriffsöffnung 52 ausgebildet, in welche ein Formschluss-Eingriffsende 54 der Schwenkwelle 14 eingreift. Auch hier können eine Eingriffsöffnung-Querschnittsgeometrie der zweiten Formschluss-Eingriffsöffnung 52 und eine Eingriffsende-Querschnittsgeometrie des Formschluss-Eingriffsendes 54 der Schwenkwelle 14 zueinander komplementär sein, so dass die Schwenkwelle 14 mit ihrem Formschluss-Eingriffsende 54 im Wesentlichen spielfrei in die zweite Formschluss-Eingriffsöffnung 52 eingreifen kann. Dies dann dadurch unterstützt sein, dass das Formschluss-Eingriffsende 54 sich in Richtung zu seinem freien Ende, also in Richtung auf die Antriebswelle 34 zu, verjüngend ausgebildet ist.

Ein Vorspannorgan 58 ist als Schraubendruckfeder ausgebildet und weist mehrere die auch einer Kopplungsachse K entsprechende Schwenkwelle A umgebende Windungen 60 auf. In einem von dem Kopplungselement 46 entfernten axialen Endbereich 62 weist das Vorspannorgan 58 einen beispielsweise durch einen Windungsendabschnitt 64 desselben bereitgestellten ersten Verbindungsbereich auf, in welchem das Vorspannorgan 58 an einem napf- oder topfförmig geformten Abstützelement 66 festgelegt ist. In einem zweiten axialen Endbereich 68 weist das Vorspannorgan 58 einen beispielsweise durch einen zweiten Windungsendabschnitt 70 bereitgestellten zweiten Verbindungsbereich auf, in welchem das Vorspannorgan 58 am Abstützelement 46 festgelegt ist. Hierzu kann am Abstützelement 46 im Bereich des ersten Kopplungsbereichs 42 eine Befestigungslasche 72 vorgesehen sein, die um den Windungsendabschnitt 70 gelegt ist und durch Verpressen diesen fest klammert. In entsprechender Weise kann am Abstützelement 66 von einem Bodenbereich 74 desselben abstehend eine Verbindungslasche 76 vorgesehen sein, welche den ersten Windungsendabschnitt 74 umgibt und durch Verpressen diesen fest klammert.

Zwischen dem Abstützelement 66 und dem Kopplungselement 46 wirken zwei an einander entgegengesetzten Umfangsbereichen positionierte Vormontage-Blockieranordnungen 78. Jede Vormontage-Blockieranordnung 78 umfasst am Kopplungselement 46, insbesondere am ersten Kopplungsbereich 42 desselben, einen nach radial außen vorspringenden Blockieransatz 80. In Zuordnung zu dem Blockieransatz 80 umfasst jede Vormontage-Blockieranordnung 78 am Abstützelement 66 einen von diesen im Wesentlichen in Richtung der Kopplungsachse K auf das Kopplungselement 46 sich zu erstreckenden Blockierarm 82. An seinem von dem Abstützelement 66 entfernten Endbereich 84 weist der Blockierarm 82 einen in Umfangsrichtung vorstehenden Axialblockiervorsprung 86 auf, welcher einen Axialblockierbereich 88 bildet und mit welchem der Blockierarm 82 den Blockieransatz 80 an seiner vom Abstützelement 66 abgewandten Seite in Umfangsrichtung übergreift und somit in axialer Richtung hintergreift. Durch das im Zusammenbauzustand bzw. einem Vormontage-Blockierzustand unter Vorspannung gehaltene Vorspannorgan 58 ist der Blockieransatz 80 axial gegen den Axialblockiervorsprung 86 vorgespannt und somit an diesem gehalten.

Axial anschließend an den Axialblockiervorsprung 86 ist an dem Blockierarm 82 ein dem Blockieransatz 80 in Umfangsrichtung gegenüberliegender bzw. durch die Vorspannung des Vorspannorgans 58 an diesem anliegend gehaltener Umfangsblockierbereich 90 vorgesehen. Im Vormontage-Blockierzustand ist das Vorspannorgan 88 nicht nur axial komprimiert gehalten, sondern auch in Umfangsrichtung verspannt gehalten, so dass eine definierte Abstützung des Axialblockierbereichs 88 und des Umfangsblockierbereichs 90 am Blockieransatz 80 gewährleistet ist.

Axial anschließend an den Umfangsblockierbereich 90 ist am Blockierarm 82 ein mit einer Freigabeaussparung 92 bereitgestellter Freigabebereich 94 vorgesehen. In diesem Freigabebereich 94 ist der Blockierarm 82 bezüglich des Umfangsblockierbereichs 90 in Umfangsrichtung von dem Blockieransatz 80 weg zurückversetzt. Bei im Vormontage-Blockierzustand gehaltener Kopplungsanordnung 36 stützt der Blockieransatz 82 sich an dem axial zwischen dem Axialblockierbereich 88 und dem Freigabebereich 94 liegenden Umfangsblockierbereich 90 ab. Wird das Abstützelement 66 axial auf das Kopplungselement 46 zu verschoben, so gelangt der Blockieransatz 80 axial in den Bereich der Freigabeaussparung 92. Könnten das Kopplungselement 46 und das Abstützelement 66 unter der Vorspannung des Vorspannorgans 58 eine Relativ-Umfangsdrehung bezüglich einander ausführen, würde der Blockieransatz 80 in die Freigabeaussparung 92 eintreten und sich im Bereich der Freigabeaussparung 92 am Blockierarm 82 abstützen.

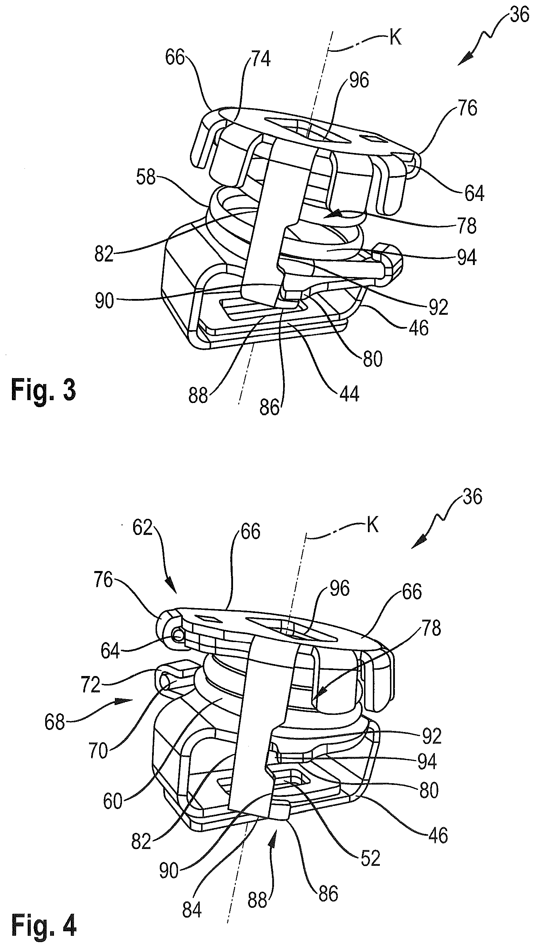

Zum Aufbau einer Abgasklappe kann zunächst eine Abgasklappen-Vormontagebaugruppe bereitgestellt werden, welche im Wesentlichen die Kopplungsanordnung 36 der Fig. 3 und 4 und das Klappenrohr 12 mit der daran drehbar getragenen und die Klappenblende 16 tragenden Schwenkwelle 14 umfasst. Der Schwenkantrieb 30 mit einer Antriebswelle 34 ist in diesem Zustand noch nicht angekoppelt.

Zur Herstellung dieser Abgasklappen-Vormontagebaugruppe wird zunächst die in dem in Fig. 3 dargestellten Vormontage-Blockierzustand gehaltene Kopplungsanordnung 36 an der Schwenkwelle 14 bzw. deren Formschluss-Eingriffsende 54 festgelegt. Dazu wird der zweite Kopplungsbereich 44 mit der darin ausgebildeten Formschluss-Eingriffsöffnung 52 auf das Formschluss-Eingriffsende 54 der Schwenkwelle 14 aufgeschoben und daran vorzugsweise materialschlüssig, beispielsweise durch Verschweißen oder Verlöten, festgelegt. Grundsätzlich kann auch eine reibschlüssige Verbindung beispielsweise durch Aufpressen erzeugt werden.

Nachfolgend wird die in dieser Art und Weise bereitgestellte Vormontage-Baugruppe mit dem Schwenkantrieb 30 montiert. Der Schwenkantrieb 30 wird so an das Klappenrohr 12 heranbewegt, dass das Formschluss-Eingriffsende 50 von dessen Antriebswelle 34 durch eine eine Formschluss-Eingriffsöffnung bildende Öffnung 96 im Abstützelement 66 hindurch in die erste Formschluss-Eingriffsöffnung 48 im ersten Kopplungsbereich 42 des Kopplungselements 46 eingeführt wird. Die Kontur der Öffnung 96 entspricht im Wesentlichen auch der Kontur der Formschluss-Eingriffsöffnung 48 im ersten Kopplungsbereich 42, so dass auch zwischen dem Abstützelement 66 und dem Formschluss-Eingriffsende 50 der Antriebswelle 34 eine Drehkopplung bzw. eine Umfangsabstützung entsteht.

Im Zuge dieser Bewegung stützt das Abstützelement 66 sich an radialen Vorsprungbereichen der Antriebswelle 34 axial ab. Eine weiter anhaltende axiale Bewegung des Schwenkantriebs 30 auf das Klappenrohr 12 zu führt dazu, dass das Abstützelement 66 entgegen der Vorspannung des Vorspannorgans 58 auf das an der Schwenkwelle 14 festgelegte Kopplungselement 36 zu verschoben wird. Dabei verschiebt bei jeder Vormontage-Blockieranordnung 78 der Blockieransatz 80 sich axial entlang des Umfangsblockierbereichs 90 und gelangt in den axialen Bereich des Freigabebereichs 94. In diesem in Fig. 4 dargestellten Zustand ist das Kopplungselement 46 nicht mehr über die Blockieransätze 80 in Umfangsrichtung an den Blockierarmen 82 abgestützt. Die durch das Vorspannorgan 58 generierte Umfangsvorspannung wirkt dann zwischen den beiden Wellen 34, 14, so dass ein zwischen den beiden Wellen 34, 14 und den zugeordneten Formschluss-Eingriffsöffnungen 48, 52 möglicherweise vorhandenes, geringes Umfangsbewegungsspiel eliminiert wird und diese beiden Wellen 14, 34 in definierter Umfangspositionierung bezüglich einander gehalten sind. Im Zuge dieses Eliminierens eines Umfangsbewegungsspiels kann ein jeweiliger Blockieransatz 80 in Umfangsrichtung geringfügig in die diesem zugeordnete Freigabeaussparung 92 eintreten, kommt dabei jedoch nicht in Anlage an dem Blockierarm 82.

Die feste Verbindung der Trägerstruktur 28 mit dem Schwenkantrieb 30 kann beispielsweise durch Formschlusseingriff nach Art eines Bajonettverschlusses oder/und durch Materialschluss, also beispielsweise Verschweißen, erfolgen.

Durch das im dargestellten Ausgestaltungsbeispiel als Schraubendruckfeder ausgeführte Vorspannorgan 58 wird somit einerseits eine definierte Umfangs-Relativpositionierung zwischen der Antriebswelle 34 und dem Kopplungselement 46 erzwungen, so dass bei Drehung der Antriebswelle 34 kein Totgang zwischen dieser und dem Kopplungselement 46 auftreten kann. Gleichzeitig wird durch die vermittels des Vorspannorgans 58 generierte axiale Vorspannung eine definierte Positionierung der Schwenkwelle 14 im Klappenrohr 12 in Richtung der Schwenkachse A erzwungen.

Mit der erfindungsgemäßen Ausgestaltung der Kopplung zwischen der Antriebswelle 34 und der Schwenkwelle 14 wird eine definierte Relativpositionierung dieser beiden Wellen erzwungen, so dass ein zu undefinierten Positionierungen der Klappenblende 16 führendes Bewegungsspiel der beiden Wellen 34, 14 bezüglich einander nicht auftreten kann. Gleichzeitig wird ein zur Wärmeübertragung führender Kontakt zwischen den beiden Wellen 14, 34 im Wesentlichen auf denjenigen Bereich, in welchem das Kopplungselement 46 die Schwenkwelle 14 und die Antriebswelle 34 berührt, sowie auf denjenigen Bereich, in welchem das Abstützelement 66 die Antriebswelle 34 berührt, beschränkt, wodurch eine sehr gute thermische Entkopplung bei hoher mechanischer Festigkeit der zur Kopplung vorgesehenen Baugruppe und auch bei guter Resistenz gegen äußere Einflüsse, insbesondere gegen Korrosion, erreicht wird. Ferner ermöglicht die in Richtung der Schwenkachse vorhandene Bewegungsentkopplung der beiden Wellen 14, 34 bezüglich einander thermisch induzierte Relativbewegungen, ohne dass in irgendwelchen Lagerungsbereichen Zwängungen entstehen, und die Kompensation von Bauteiltoleranzen sowie auch im Fertigungsprozess auftretenden Montagetoleranzen.

Es sei abschließend darauf hingewiesen, dass selbstverständlich auch eine Ausgestaltung realisierbar ist, bei welcher das Vorspannorgan zwischen der Schwenkwelle 14 und dem Kopplungselement 46 wirkt. Bei derartiger Ausgestaltung wäre dann die jeweilige Formgebung der einander zugewandt positionierten Enden der beiden Wellen 34,14 gegeneinander zu tauschen, so dass in einem Vormontagezustand das Kopplungselement 46 und mit diesem das Vorspannorgan 58 und das Abstützelement 66 mit der Antriebswelle 34 vormontiert ist und bei der Endmontage die Schwenkwelle 14 dann in Formschlusseingriff mit dem Kopplungselement 46 und dem Abstützelement 66 gebracht wird. Ferner wird darauf hingewiesen, dass beispielsweise die Schwenkwelle 14 mehrstückig aufgebaut sein kann und einen am Klappenrohr 12 schwenkbar getragenen und die Blendenflügel 22, 24 tragenden Wellenabschnitt sowie einen das Formschluss-Eingriffsende 54 bereitstellenden, als separates Bauteil ausgebildeten Wellenabschnitt aufweisen kann. Alternativ kann die Schwenkwelle 14 selbstverständlich mit allen funktionalen Abschnitten derselben einstückig ausgebildet sein.

## Patentansprüche

1. Kopplungsanordnung zur Kopplung einer Antriebswelle eines Schwenkantriebs einer Abgasklappe für den Abgasstrom einer Brennkraftmaschine mit einer um eine Schwenkachse drehbaren, eine Klappenblende tragenden Schwenkwelle, umfassend:
- ein Kopplungselement (46),
- ein bezüglich des Kopplungselements (46) und bezüglich eines Abstützelements (66) abgestütztes Vorspannorgan (58), wobei durch das Vorspannorgan (58) das Kopplungselement (46) in Richtung einer Kopplungsachse (K) von dem Abstützelement (66) axial weg und in Umfangsrichtung vorgespannt ist,
- wenigstens eine Vormontage-Blockieranordnung (78) zum Halten des Abstützelements (66) unter axialer Vorspannung und Umfangsvorspannung in einer Vormontagestellung bezüglich des Kopplungselements (46),
**dadurch gekennzeichnet, dass** das Kopplungselement (46) einen mit einer Antriebswelle (34) in Drehkopplungsformschlusseingriff zu bringenden ersten Kopplungsbereich (42) und einen mit einer Schwenkwelle (14) in Drehkopplungsformschlusseingriff zu bringenden zweiten Kopplungsbereich (44) aufweist.

2. Kopplungsanordnung nach Anspruch 1, **dadurch gekennzeichnet, dass** das Vorspannorgan (58) eine Schraubenfeder vorzugsweise mit einer Mehrzahl von Windungen (60) umfasst.

3. Kopplungsanordnung nach Anspruch 1 oder 2, **dadurch gekennzeichnet, dass** das Vorspannorgan (58) in einem ersten Verbindungsbereich an das Kopplungselement (46) fest angekoppelt ist und in einem zweiten Verbindungsbereich an das Abstützelement (66) fest angekoppelt ist, vorzugsweise wobei der erste Verbindungsbereich einen in einem ersten axialen Endbereich (62) des Vorspannorgans (58) sich erstreckenden ersten Windungsendabschnitt (64) umfasst und der zweite Verbindungsbereich einen in einem zweiten axialen Endbereich (68) des Vorspannorgans (58) sich erstreckenden zweiten Windungsendabschnitt (70) umfasst.

4. Kopplungsanordnung nach einem der vorangehenden Ansprüche, **dadurch gekennzeichnet, dass** das Kopplungselement (46) im ersten Kopplungsbereich (42) und im zweiten Kopplungsbereich (44) im Wesentlichen plattenartig ausgebildet ist, oder/und dass in wenigstens einem der Kopplungsbereiche (42, 44) das Kopplungselement (46) einander überlappend angeordnete Kopplungselement-Endbereiche aufweist.

5. Kopplungsanordnung nach einem der vorangehenden Ansprüche, **dadurch gekennzeichnet, dass** die wenigstens eine Vormontage-Blockieranordnung (78) an einem Element von Kopplungselement (46) und Abstützelement (66) einen Blockieransatz (80) umfasst und an dem anderen Element von Kopplungselement (46) und Abstützelement (66) einen Blockierarm (82) mit einem den Blockieransatz (80) an der von dem anderen Element von Kopplungselement (46) und Abstützelement (66) abgewandten Seite übergreifenden und in einem Vormontage-Blockierzustand daran angreifenden Axialblockierbereich (88) und einem dem Blockieransatz (80) in Umfangsrichtung gegenüberliegenden und im Vormontage-Blockierzustand daran anliegenden Umfangsblockierbereich (90) umfasst.

6. Kopplungsanordnung nach Anspruch 5, **dadurch gekennzeichnet, dass** der Blockieransatz (80) von dem einen Element von Kopplungselement (46) und Abstützelement (66) bezüglich der Kopplungsachse (K) nach radial außen vorsteht, oder/und dass der Blockierarm (82) von dem anderen Element von Kopplungselement (46) und Abstützelement (66) sich im Wesentlichen axial auf das eine Element von Kopplungselement (46) und Abstützelement (66) zu erstreckt.

7. Kopplungsanordnung nach Anspruch 5 oder 6, **dadurch gekennzeichnet, dass** an dem Blockierarm (82) ein bezüglich des Umfangsblockierbereichs (90) in Umfangsrichtung von dem Blockieransatz (80) weg zurückversetzter Freigabebereich (94) vorgesehen ist,
vorzugsweise wobei der Freigabebereich (94) eine Freigabeaussparung (92) umfasst.

8. Kopplungsanordnung nach Anspruch 6 und Anspruch 7, **dadurch gekennzeichnet, dass** der Umfangsblockierbereich (90) in Richtung der Kopplungsachse (K) zwischen dem Freigabebereich (94) und dem Axialblockierbereich (88) angeordnet ist.

9. Kopplungsanordnung nach einem der Ansprüche 5-8, **dadurch gekennzeichnet, dass** das eine Element das Kopplungselement (46) ist und das andere Element das Abstützelement (66) ist.

10. Abgasklappen-Vormontagebaugruppe, umfassend ein Klappenrohr (12), eine im Inneren des Klappenrohrs (12) an einer um eine Schwenkachse (A) drehbaren Schwenkwelle (14) getragene Klappenblende (16) sowie eine an der Schwenkwelle (14) festgelegte Kopplungsanordnung (36) nach einem der vorangehenden Ansprüche.

11. Abgasklappen-Vormontagebaugruppe nach Anspruch 10, **dadurch gekennzeichnet,**
**dass** die Kopplungsanordnung (36) mit ihrem zweiten Kopplungsbereich (44) an der Schwenkwelle (14) festgelegt ist, und dass im zweiten Kopplungsbereich (44) die Kopplungsanordnung (36) eine zweite Formschluss-Eingriffsöffnung (52) mit einer Eingriffsöffnung-Querschnittsgeometrie aufweist und die Schwenkwelle (14) ein in die zweite Formschluss-Eingriffsöffnung (52) eingreifendes Formschluss-Eingriffsende (54) mit zur Eingriffsöffnung-Querschnittsgeometrie der zweiten Formschluss-Eingriffsöffnung (52) komplementärer Eingriffsende-Querschnittsgeometrie aufweist,
oder/und
**dass** die Kopplungsanordnung (36) durch Materialschluss an der Schwenkwelle (14) festgelegt ist.

12. Abgasklappe für den Abgasstrom einer Brennkraftmaschine, umfassend ein Klappenrohr (12), eine im Inneren des Klappenrohrs (12) an einer um eine Schwenkachse (A) drehbaren Schwenkwelle (14) getragene Klappenblende (16), einen Schwenkantrieb (30) für die Schwenkwelle (14) sowie eine die Schwenkwelle (14) mit einer Antriebswelle (34) des Schwenkantriebs (30) zur gemeinsamen Drehung um die Schwenkachse (A) koppelnde Kopplungsanordnung (36) nach einem der Ansprüche 1-9, vorzugsweise wobei die Kopplungsanordnung (36) an der Schwenkwelle (14) gegen Loslösen gesichert getragen ist.

13. Abgasklappe nach Anspruch 12, **dadurch gekennzeichnet, dass** das Vorspannorgan (58) an einer Welle von Antriebswelle (34) und Schwenkwelle (14) über das Abstützelement (66) axial und in Umfangsrichtung abgestützt ist und an der anderen Welle von Antriebswelle (34) und Schwenkwelle (14) über das Kopplungselement (46) axial abgestützt ist.

14. Abgasklappe nach Anspruch 12 oder 13, sofern auf Anspruch 5 rückbezogen, **dadurch gekennzeichnet, dass** der Blockieransatz (80) außer Blockiereingriff mit Axialblockierbereich (88) und dem Umfangsblockierbereich (90) des Blockierarms (82) ist.

15. Abgasklappe nach einem Ansprüche 12-14, **dadurch gekennzeichnet, dass** im ersten Kopplungsbereich (42) die Kopplungsanordnung (36) eine erste Formschluss-Eingriffsöffnung (48) mit einer Eingriffsöffnung-Querschnittsgeometrie aufweist und die Antriebswelle (34) ein in die erste Formschluss-Eingriffsöffnung (48) eingreifendes Formschluss-Eingriffsende (50) mit zur Eingriffsöffnung-Querschnittsgeometrie der ersten Formschluss-Eingriffsöffnung (48) komplementärer Eingriffsende-Querschnittsgeometrie aufweist, oder/und dass im zweiten Kopplungsbereich (44) die Kopplungsanordnung (36) eine zweite Formschluss-Eingriffsöffnung (52) mit einer Eingriffsöffnung-Querschnittsgeometrie aufweist und die Schwenkwelle (14) ein in die zweite Formschluss-Eingriffsöffnung (52) eingreifendes Formschluss-Eingriffsende (54) mit zur Eingriffsöffnung-Querschnittsgeometrie der zweiten Formschluss-Eingriffsöffnung (52) komplementärer Eingriffsende-Querschnittsgeometrie aufweist, oder/und dass das Abstützelement (66) eine Formschluss-Eingriffsöffnung (96) mit einer Eingriffsöffnung-Querschnittsgeometrie aufweist und die Antriebswelle (34) ein in die Formschluss-Eingriffsöffnung (96) des Abstützelements (66) eingreifendes Formschluss-Eingriffsende (50) mit zur Eingriffsöffnung-Querschnittsgeometrie der Formschluss-Eingriffsöffnung (96) des Abstützelements (66) komplementärer Eingriffsende-Querschnittsgeometrie aufweist, vorzugsweise wobei das Formschluss-Eingriffsende (50) der Antriebswelle (34) in Richtung der Schwenkachse (A) im Wesentlichen zylindrisch ausgebildet ist.

## Claims

1. Coupling device for coupling a drive shaft of a pivot drive of an exhaust flap for the exhaust gas stream of an internal combustion engine with a pivot shaft rotatable about a pivot axis and carrying a flap diaphragm, comprising:
- a coupling element (46),
- a prestressing element (58) supported in relation to the coupling element (46) and in relation to a support element (66), wherein the coupling element (46) is prestressed by the prestressing element (58) in the direction of a coupling axis (K) axially away from the support element (66) and in the circumferential direction,
- at least one preassembly-blocking device (78) for holding the support element (66) under axial prestress and circumferential prestress in a preassembled position in relation to the coupling element (46),
**characterized in that** the coupling element (46) comprises a first coupling area (42) to be brought into rotary coupling positive-locking meshing with a drive shaft (34) and with a second coupling area (44) to be brought into rotary coupling positive-locking meshing with a pivot shaft (14).

2. Coupling device in accordance with claim 1, **characterized in that** the prestressing element (58) comprises a coil spring, preferably with a plurality of turns (60).

3. Coupling device in accordance with claim 1 or 2, **characterized in that** the prestressing element (58) is permanently coupled to the coupling element (46) in a first connection area and is coupled permanently to the support element (66) in a second connection area, preferably wherein the first connection area comprises a first turn end section (64) extending in a first axial end area (62) of the prestressing element (58) and the second connection area comprises a second turn end section (70) extending in a second axial end area (68) of the prestressing element (58).

4. Coupling device in accordance with one of the preceding claims, **characterized in that** the coupling element (46) has an essentially plate-like configuration in the first coupling area (42) and in the second coupling area (44), or/and that in at least one of the coupling areas (42, 44) the coupling element (46) has coupling element end areas arranged such that they overlap one another.

5. Coupling device in accordance with one of the preceding claims, **characterized in that** the at least one preassembly-blocking device (78) comprises a blocking attachment (80) at one element of coupling element (46) and support element (66) and at the other element of coupling element (46) and support element (66) a blocking arm (82) with an axial blocking area (88) that extends over the blocking attachment (80) on the side facing away from the other element of coupling element (46) and support element (66) and acts thereon in a preassembly-blocking state and with a circumferential blocking area (90) located opposite the blocking attachment (80) in the circumferential direction and being in contact therewith in the preassembly-blocking state.

6. Coupling device in accordance with claim 5, **characterized in that** the blocking attachment (80) projects radially outwards from the one element of coupling element (46) and support element (66) in relation to the coupling axis (K), or/and that the blocking arm (82) extends from the other element of coupling element (46) and support element (66) essentially axially to the one element of coupling element (46) and support element (66).

7. Coupling device in accordance with claim 5 or 6, **characterized in that** a release area (94) set back away from the blocking attachment (80) in the circumferential direction in relation to the circumferential blocking area (90) is provided at the blocking arm (82),
preferably wherein the release area (94) comprises a release recess (92).

8. Coupling device in accordance with claim 6 and claim 7, **characterized in that** the circumferential blocking area (90) is arranged in the direction of the coupling axis (K) between the release area (94) and the axial blocking area (88).

9. Coupling device in accordance with one of the claims 5-8, **characterized in that** the one element is the coupling element (46) and the other element is the support element (66).

10. Exhaust flap preassembled assembly unit, comprising a flap tube (12), a flap diaphragm (16) carried on a pivot shaft (14) rotatable about a pivot axis (A) in the interior of the flap tube (12) as well as a coupling device (36) fixed at the pivot shaft (14) in accordance with one of the preceding claims.

11. Exhaust flap preassembled assembly unit in accordance with claim 10, **characterized in that**
the coupling device (36) is fixed with its second coupling area (44) at the pivot shaft (14) and that in the second coupling area (44) the coupling device (36) has a second positive-locking meshing opening (52) with a meshing opening cross-sectional geometry and the pivot shaft (14) has a positive-locking meshing end (54) meshing with the second positive-locking meshing opening (52) with a meshing end cross-sectional geometry complementary to the meshing opening cross-sectional geometry of the second positive-locking meshing opening (52),
or/and
that the coupling device (36) is fixed at the pivot shaft (14) by connection in substance.

12. Exhaust flap for the exhaust gas stream of an internal combustion engine, comprising a flap tube (12), a flap diaphragm (16) carried on a pivot shaft (14) rotatable about a pivot axis (A) in the interior of the flap tube (12), a pivot drive (30) for the pivot shaft (14) as well as a coupling device (36) coupling the pivot shaft (14) with a drive shaft (34) of the pivot drive (30) for joint rotation about the pivot axis (A) in accordance with one of the claims 1-9,
preferably wherein the coupling device (36) is carried at the pivot shaft (14) secured against detachment.

13. Exhaust flap in accordance with claim 12, **characterized in that** the prestressing element (58) is supported axially and in the circumferential direction via the support element (66) at one shaft of the drive shaft (34) and the pivot shaft (14) and it is supported axially via the coupling element (46) at the other shaft of the drive shaft (34) and the pivot shaft (14).

14. Exhaust flap in accordance with claim 12 or 13, if referred back to claim 5, **characterized in that** the blocking attachment (80) is out of blocking meshing with the axial blocking area (88) and with the circumferential blocking area (90) of the blocking arm (82).

15. Exhaust flap in accordance with one of the claims 12-14, **characterized in that** in the first coupling area (42) the coupling device (36) has a first positive-locking meshing opening (48) with a meshing opening cross-sectional geometry and the drive shaft (34) has a positive-locking meshing end (50) meshing with the first positive-locking meshing opening (48) with a meshing end cross-sectional geometry complementary to the meshing opening cross-sectional geometry of the first positive-locking meshing opening (48), or/and that in the second coupling area (44) the coupling device (36) has a second positive-locking meshing opening (52) with a meshing opening cross-sectional geometry and the pivot shaft (14) has a positive-locking meshing end (54) meshing with the second positive-locking meshing opening (52) with a meshing end cross-sectional geometry complementary to the meshing opening cross-sectional geometry of the second positive-locking meshing opening (52), or/and that the support element (66) has a positive-locking meshing opening (96) with a meshing opening cross-sectional geometry and the drive shaft (34) has a positive-locking meshing end (50) meshing with the positive-locking meshing opening (96) of the support element (66) with a meshing end cross-sectional geometry complementary to the meshing opening cross-sectional geometry of the positive-locking meshing opening (96) of the support element (66), preferably wherein the positive-locking meshing end (50) of the drive shaft (34) has an essentially cylindrical configuration in the direction of the pivot axis (A).

## Revendications

1. Dispositif d'accouplement pour l'accouplement d'un arbre d'entraînement d'un entraînement de pivot d'un clapet d'échappement pour le flux de gaz d'échappement d'un moteur à combustion interne avec un arbre de pivot pouvant tourner autour d'un axe de pivotement et portant une membrane de clapet, comprenant :
- un élément d'accouplement (46),
- un élément de précontrainte (58) supporté par rapport à l'élément d'accouplement (46) et par rapport à un élément de support (66), dans lequel l'élément d'accouplement (46) est précontraint par l'élément de précontrainte (58) dans la direction d'un axe d'accouplement (K) s'éloignant axialement de l'élément de support (66) et dans la direction circonférentielle,
- au moins un dispositif de blocage de prémontage (78) pour maintenir l'élément de support (66) sous précontrainte axiale et circonférentielle dans une position prémontée par rapport à l'élément d'accouplement (46),
**caractérisé en ce que** l'élément d'accouplement (46) comprend une première zone d'accouplement (42) à amener en engrènement positif d'accouplement rotatif avec un arbre d'entraînement (34) et avec une deuxième zone d'accouplement (44) à amener en engrènement positif d'accouplement rotatif avec un arbre de pivotement (14).

2. Dispositif d'accouplement selon la revendication 1, **caractérisé en ce que** l'élément de précontrainte (58) comprend un ressort hélicoïdal, de préférence à plusieurs enroulements (60).

3. Dispositif d'accouplement selon la revendication 1 ou 2, **caractérisé en ce que** l'élément de précontrainte (58) est couplé en permanence à l'élément d'accouplement (46) dans une première zone de raccordement et est couplé en permanence à l'élément de support (66) dans une deuxième zone de raccordement, de préférence dans lequel la première zone de raccordement comprend une première section d'extrémité d'enroulement (64) s'étendant dans une première zone d'extrémité axiale (62) de l'élément de précontrainte (58) et la deuxième zone de raccordement comprend une deuxième section d'extrémité d'enroulement (70) s'étendant dans une deuxième zone d'extrémité axiale (68) de l'élément de précontrainte (58).

4. Dispositif d'accouplement selon l'une des revendications précédentes, **caractérisé en ce que** l'élément d'accouplement (46) présente une configuration essentiellement en forme de plaque dans la première zone d'accouplement (42) et dans la deuxième zone d'accouplement (44), ou/et **en ce que** dans au moins l'une des zones d'accouplement (42, 44), l'élément d'accouplement (46) présente des zones d'extrémité de l'élément d'accouplement disposées de telle sorte qu'elles se chevauchent.

5. Dispositif d'accouplement selon l'une des revendications précédentes, **caractérisé en ce que** ledit au moins un dispositif de blocage de prémontage (78) comprend un embout de blocage (80) sur un élément de l'élément d'accouplement (46) et de l'élément de support (66) et sur l'autre élément de l'élément d'accouplement (46) et de l'élément de support (66) un bras de blocage (82) avec une zone de blocage axiale (88) qui s'étend sur l'embout de blocage (80) sur le côté opposé à l'autre élément de l'élément d'accouplement (46) et de l'élément de support (66) et qui agit sur celui-ci dans un état de blocage de prémontage, et avec une zone de blocage circonférentielle (90) située à l'opposé de l'embout de blocage (80) dans la direction circonférentielle et étant en contact avec celui-ci dans l'état de blocage de prémontage.

6. Dispositif d'accouplement selon la revendication 5, **caractérisé en ce que** l'embout de blocage (80) fait saillie radialement vers l'extérieur par rapport à l'axe d'accouplement (K) à partir d'un élément de l'élément d'accouplement (46) et de l'élément de support (66), et/ou **en ce que** le bras de blocage (82) s'étend à partir de l'autre élément de l'élément d'accouplement (46) et de l'élément de support (66) essentiellement axialement vers ledit un élément de l'élément d'accouplement (46) et de l'élément de support (66).

7. Dispositif d'accouplement selon la revendication 5 ou 6, **caractérisé en ce qu'**une zone de libération (94) est prévue sur le bras de blocage (82) en retrait de l'embout de blocage (80) dans la direction circonférentielle par rapport à la zone de blocage circonférentielle (90),
de préférence dans lequel la zone de libération (94) comporte un évidement de libération (92).

8. Dispositif d'accouplement selon la revendication 6 et la revendication 7, **caractérisé en ce que** la zone de blocage circonférentielle (90) est disposée dans la direction de l'axe d'accouplement (K) entre la zone de libération (94) et la zone de blocage axiale (88).

9. Dispositif d'accouplement selon l'une des revendications 5 à 8, **caractérisé en ce que** l'un des éléments est l'élément d'accouplement (46) et l'autre élément est l'élément de support (66).

10. Unité de montage préassemblée de clapet d'échappement, comprenant un tube de clapet (12), une membrane de clapet (16) portée par un arbre de pivotement (14) pouvant tourner autour d'un axe de pivotement (A) à l'intérieur du tube de clapet (12) ainsi qu'un dispositif d'accouplement (36) fixé à l'arbre de pivotement (14) selon l'une des revendications précédentes.

11. Unité de montage préassemblée de clapet d'échappement selon la revendication 10, **caractérisé en ce que**
le dispositif d'accouplement (36) est fixé par sa deuxième zone d'accouplement (44) sur l'arbre de pivotement (14) et **en ce que** le dispositif d'accouplement (36) présente dans la deuxième zone d'accouplement (44) une deuxième ouverture d'engrènement à engagement positif (52) avec une géométrie de section transversale d'ouverture d'engrènement et l'arbre de pivotement (14) présente une extrémité d'engrènement à engagement positif (54) s'engrenant avec la deuxième ouverture d'engrènement à engagement positif (52) avec une géométrie de section transversale d'extrémité d'engrènement complémentaire à la géométrie de section transversale d'ouverture d'engrènement de la deuxième ouverture d'engrènement à engagement positif (52), ou/et
que le dispositif d'accouplement (36) est fixé à l'arbre de pivotement (14) par une liaison en substance.

12. Clapet d'échappement pour le flux de gaz d'échappement d'un moteur à combustion interne, comprenant un tube de clapet (12), une membrane de clapet (16) portée sur un arbre de pivotement (14) pouvant tourner autour d'un axe de pivotementement (A) à l'intérieur du tube de clapet (12), un entraînement de pivotement (30) pour l'arbre de pivotement (14) ainsi qu'un dispositif d'accouplement (36) qui accouple l'arbre de pivotement (14) à un arbre d'entraînement (34) de l'entraînement de pivotement (30) pour une rotation commune autour de l'axe de pivotementement (A) selon l'une des revendications 1-9,
de préférence dans lequel le dispositif d'accouplement (36) est supporté à l'arbre de pivotement (14) protégé contre le détachement.

13. Clapet d'échappement selon la revendication 12, **caractérisé en ce que** l'élément de précontrainte (58) est supporté axialement et dans la direction circonférentielle par l'intermédiaire de l'élément de support (66) sur un arbre de l'arbre d'entraînement (34) et de l'arbre de pivotement (14) et il est supporté axialement par l'intermédiaire de l'élément d'accouplement (46) sur l'autre arbre de l'arbre d'entraînement (34) et de l'arbre de pivotement (14).

14. Clapet d'échappement selon la revendication 12 ou 13, si renvoyé à la revendication 5, **caractérisé en ce que** l'embout de blocage (80) est hors de prise de blocage avec la zone de blocage axiale (88) et avec la zone de blocage circonférentielle (90) du bras de blocage (82).

15. Clapet d'échappement selon l'une des revendications 12-14, **caractérisé en ce que** le dispositif d'accouplement (36) présente, dans la première zone d'accouplement (42), une première ouverture d'engrènement à engagement positif (48) avec une géométrie de section transversale d'ouverture d'engrènement et l'arbre d'entraînement (34) présente une extrémité d'engrènement à engagement positif (50) s'engrenant avec la première ouverture d'engrènement à engagement positif (48) avec une géométrie de section transversale d'extrémité d'engrènement complémentaire à la géométrie de section transversale d'ouverture d'engrènement de la première ouverture d'engrènement à engagement positif (48), ou/et que dans la deuxième zone d'accouplement (44), le dispositif d'accouplement (36) présente une deuxième ouverture d'engrènement à engagement positif (52) avec une géométrie de section transversale d'ouverture d'engrènement et l'arbre de pivotement (14) présente une extrémité d'engrènement à engagement positif (54) s'engrenant avec la deuxième ouverture d'engrènement à engagement positif (52) avec une géométrie de section transversale d'extrémité d'engrènement complémentaire à la géométrie de section transversale d'ouverture d'engrènement de la deuxième ouverture d'engrènement à engagement positif (52), ou/et que l'élément de support (66) présente une ouverture d'engrènement à engagement positif (96) avec une géométrie de section transversale d'ouverture d'engrènement et l'arbre d'entraînement (34) présente une extrémité d'engrènement à engagement positif (50) s'engrenant avec l'ouverture d'engrènement à engagement positif (96) de l'élément de support (66) avec une géométrie de section transversale d'extrémité d'engrènement complémentaire à la géométrie de section transversale d'ouverture d'engrènement de l'ouverture d'engrènement à engagement positif (96) de l'élément de support (66), de préférence dans lequel l'extrémité d'engrènement à engagement positif (50) de l'arbre d'entraînement (34) a une configuration essentiellement cylindrique dans la direction de l'axe de pivotement (A).
